# EUROPÄISCHE PATENTANMELDUNG

(11) **EP 1 661 804 A1**
(43) Veröffentlichungstag der Anmeldung: **31.05.2006**
(21) Anmeldenummer: 05111233.2
(22) Anmeldetag: 24.11.2005
(51) Int. Cl.: B63B 38/00, F16L 1/16

(54) **Verfahren zum Transport von Rohrabschnitten auf Gewässern**

(30) Priorität: 26.11.2004 DE 102004058031
(71) Anmelder: SIEMENS AKTIENGESELLSCHAFT, 80333 München (DE)
(72) Erfinder: Koch, Hermann, 91466 Gerhardshofen (DE)

(57) **Zusammenfassung**

Gasisolierte elektrische Leitungen weisen ein rohrförmiges Kapselungsgehäuse auf. Die gasisolierten elektrischen Leitungen sind aus Rohrabschnitten (2) gebildet, die in ihrem Innern einen oder mehrere isoliert gehaltene elektrische Leiter aufweisen. Das Innere der Rohrabschnitte ist mit einem Isoliergas befüllt. Zum Transport der Rohrabschnitte (2) in eine Verlegezone (4) auf einem Gewässer werden die Rohrabschnitte schwimmend transportiert. Dabei sind die Rohrabschnitte (2) mit einem Gas befüllt und dienen als Schwimmkörper.

## Beschreibung

Verfahren zum Transport von Rohrabschnitten auf Gewässern

Die Erfindung bezieht sich ein Verfahren zum Transport von Rohrabschnitten auf Gewässern.

Es ist bekannt Rohrabschnitte beispielsweise mittels Kraftfahrzeugen von einem Herstellungsort zu ihrem Verlegeort zu transportieren. Insbesondere bei der Verlegung von gasisolierten elektrischen Leitungen wurde dieses Verfahren bisher angewandt. Für die elektrische Erschließung von Off-Shore-Windenergie-Parks ist es nötig, leistungsfähige elektrische Verbindungen mit an Land befindlichen Elektroenergie-Verteilungs- und Übertragungsnetzen herzustellen. Aufgrund der punktuellen Energieerzeugung in den Off-Shore-Windenergie-Parks und den langen Übertragungswegen, eignen sich zum Anschluss der Off-Shore-Sea-Windenergie-Parks insbesondere gasisolierte elektrische Leitungen.

Aufgabe der Erfindung ist es, ein Verfahren zum Transport von Rohrabschnitten auf Gewässern anzugeben, um ein effektives zügiges Verlegen von langen gasisolierten elektrischen Leitungen zu ermöglichen.

Erfindungsgemäß wird die Aufgabe bei einem Verfahren der eingangs genannten Art dadurch gelöst, dass die Rohrabschnitte schwimmend transportiert werden, wobei die Rohrabschnitte mit einem Gas befüllt sind und als Schwimmkörper dienen.

Gasisolierte Leitungen weisen ein im Wesentlichen rohrförmiges Kapselungsgehäuse auf, in dessen Innern mittels Isolierabstandshaltern ein oder mehrere elektrische Leiter angeordnet sind. Um die Ausmaße der gasisolierten elektrischen Leiter zu begrenzen, weist ein im Inneren des Kapselungsgehäuses befindliches Isoliergas einen erhöhten Druck auf. Als Isoliergas werden vorzugsweise elektronegative Gase, wie Schwefelhexafluorid, Stickstoff oder Gemische aus diesen Gasen, verwendet. Die Verlegung von derartigen gasisolierten elektrischen Leitern in einem Gewässer stellt besondere Anforderungen an den Korrosionsschutz und an die Langlebigkeit der Gesamtanordnung. Nach der erfolgten Verlegung der gasisolierten Leitung in einem Gewässer muss über mehrere Jahrzehnte das Eindringen von Feuchtigkeit in das Innere des Kapselungsgehäuses verhindert werden. Dazu sind entsprechend zuverlässige Verbindungselemente, Korrosionsschutzelemente usw. vorzusehen. Um dieses zu garantieren, werden einzelne Rohrabschnitte oftmals unter industriellen Bedingungen vorgefertigt. Diese vorgefertigten und beispielsweise auch elektrisch vorgeprüften Rohrabschnitte können dann zum Verlegeort transportiert werden und dort miteinander verbunden werden. Die vorgefertigten Rohrabschnitte sind dabei hinsichtlich ihres Korrosionsschutzes bereits vollständig ausgerüstet. Um ein Eindringen von Fremdkörpern und ein Verschmutzen der Innenwandung des Kapselungsgehäuses bzw. der Oberflächen der Isolierabstandshalter zu verhindern, sind die Kapselungsgehäuse hermetisch versiegelt. Aufgrund dieser technologisch bedingten Vorfertigung der Rohrabschnitte können diese auch Feuchtigkeitseinflüssen ausgesetzt werden, ohne dass die im Innern des Rohrabschnittes befindlichen elektrotechnischen Einbauten Schaden nehmen. Da die Kapselungsgehäuse zum Verlegen innerhalb eines Gewässers beispielsweise auch innerhalb eines Gewässers mit hohem Salzgehalt oder auch mit Verschmutzungen, wie Ölen usw., vorgesehen sind, kann ihre Robustheit bereits während des Transportes ausgenutzt werden. Nutzt man die Rohrabschnitte als Schwimmkörper, so ist eine effektive Verschiffung der Rohrabschnitte ermöglicht. Etwaige Begrenzungen durch die Abmessungen von Transportkähnen oder Plattformen usw. ist man nicht unterworfen.

Eine weitere vorteilhafte Ausgestaltung kann vorsehen, dass die Eintauchtiefe der Rohrabschnitte mit Ballastelementen eingestellt wird.

Durch Ballastelemente kann eine stabilere Lage der Schwimmkörper hervorgerufen werden. So kann beispielsweise vorgesehen sein, dass die Ballastelemente die Rohrabschnitte in einer vorgegebenen Lage bezüglich der Gewässeroberfläche halten.

Um eine Tarierung der Eintauchtiefe der Rohrabschnitte vorzunehmen, können die Ballastelemente in Form von Ballasttanks an den Rohrabschnitten angebracht werden. Dazu können beispielsweise Transportgestelle mit entsprechenden Schwimmtanks vorgesehen sein. Diese Schwimmtanks sorgen im unbeladenen Zustand für einen ausreichenden Auftrieb des Transportgestells. Mit zunehmender Ladung können die Schwimmtanks geflutet werden und so ein Absenken der Rohrabschnitte unter die Wasseroberfläche erzwungen werden. Bei einer entsprechenden Tarierung kann vorgesehen sein, dass die Rohrabschnitte in einem Bereich von bis zu 10 oder 20 Metern unterhalb der Wasseroberfläche gehalten werden. Derartig zusammengestellte Transporteinheiten können dann mit einem Schlepper in eine Verlegezone transportiertet werden.

Eine weitere vorteilhafte Ausgestaltung kann vorsehen, dass mehrere Rohrabschnitte parallel gebündelt transportiert werden.

Die Rohrabschnitte können in einer für den Transport geeigneten Form zusammengestellt werden. In einem einfachen Fall kann jedoch vorgesehen sein, einzelne Rohrabschnitte zu bündeln und diese als Schwimmkörper in das Gewässer einzusetzen.

Dabei kann beispielsweise auch vorteilhaft vorgesehen sein, dass mehrere Rohrabschnitte bereits stirnseitig miteinander verbunden werden und so ein lang gestreckter Rohrabschnitt von mehreren 100 Metern oder mehreren Kilometern Länge entsteht.

Bei der stirnseitigen Verbindung mehrerer Rohrabschnitte ergibt sich der Vorteil, dass im Bereich der Verlegezone die Anzahl der herzustellenden stirnseitigen Verbindungen und damit auch zu prüfenden Verbindungen vermindert wird. Es kann auch vorgesehen sein, dass mehrere derartig lang gestreckter Abschnitte einer gasisolierten Leitung gebündelt transportiert werden.

Die parallele Bündelung gestattet es, Transporteinheiten zu schaffen, die mittels Schleppern leicht zu bugsieren sind.

Die verbundenen Rohrabschnitte können beispielsweise in Küstenbereichen vormontiert werden und dort in geschützten Buchten oder Häfen zwischengelagert werden. Dabei kann auf die Schwimmkörpereigenschaften der gasisolierten elektrischen Leitung zurückgegriffen werden. Weiterhin können die lang gestreckten Abschnitte leicht einer Hochspannungsprüfung unterzogen werden. Um zusätzlich die lang gestreckten Rohrabschnitte zu stabilisieren, kann auch vorgesehen sein, mehrere dieser Rohrabschnitte parallel miteinander zu bündeln und diese so in die Verlegezone zu transportieren.

Bei einer Verbindung mehrerer Rohrabschnitte, insbesondere bei einer stirnseitigen Verbindung, kann vorteilhaft vorgesehen sein, dass zumindest zwischen zwei Rohrabschnitte ein gemeinsamer Gasraum gebildet ist.

Durch die Ausbildung eines gemeinsamen Gasraumes kann auf die Verwendung von einer großen Anzahl von Schottisolatoren verzichtet werden. Damit ist es möglich, die Montage der Rohrabschnitte in kurzen Zeitintervallen durchzuführen.

Vorteilhafterweise kann weiter vorgesehen sein, dass während des Transportes Rohrabschnitte unterhalb eines Gewässerspiegels liegen.

Unterhalb des Gewässerspiegels sind die Auswirkungen von Wellen oder Stürmen in einem geringeren Ausmaß zu verzeichnen als auf der Wasseroberfläche selbst. Bei einer Verbringung der Rohrabschnitte unterhalb des Gewässerspiegels kann so eine unnötige mechanische Belastung der Rohrabschnitte verhindert werden. Gleichzeitig ist es möglich, einen Transport auch bei erschwerten Witterungsbedingungen durchzuführen.

Alternativ kann auch vorteilhaft vorgesehen sein, dass während des Transports Rohrabschnitte einen Gewässerspiegel durchstoßen.

Je nach Größe der Bündel bzw. nach dem Tiefgang der gebündelten Rohrabschnitte kann es auch vorgesehen sein, dass einzelne Rohrabschnitte den Gewässerspiegel durchstoßen. Bei entsprechend großen Bündeln kann vorgesehen sein, dass zusätzlich mit dem Transport der Rohrabschnitte selbst diese als Transportmittel benutzt werden um beispielsweise zusätzliche Bauteile wie Flanschanschlüsse oder andere Hilfselemente in die Verlegezone zu transportieren.

Vorteilhafterweise kann weiter vorgesehen sein, dass die Rohrabschnitte während des Transports ca. 10 m - 20 m unterhalb eines Gewässerspiegels liegen.

In Tiefen von ca. 10 bis 20 Metern können selbst bei stürmischen Bedingungen an der Gewässeroberfläche ruhige Verhältnisse herrschen, so dass auch unter schlechten Wetterbedingungen die Rohrabschnitte in die Verlegezone transportiert werden können. Somit ist ein relativ wetterunabhängiger Transport der Rohrabschnitte gewährleistet.

Im Folgenden wird ein Ausführungsbeispiel der Erfindung beschrieben und in einer Figur schematisch gezeigt.

Dabei zeigt die
Figur einen Transport eines Bündels von Rohrabschnitten in eine Verlegezone.

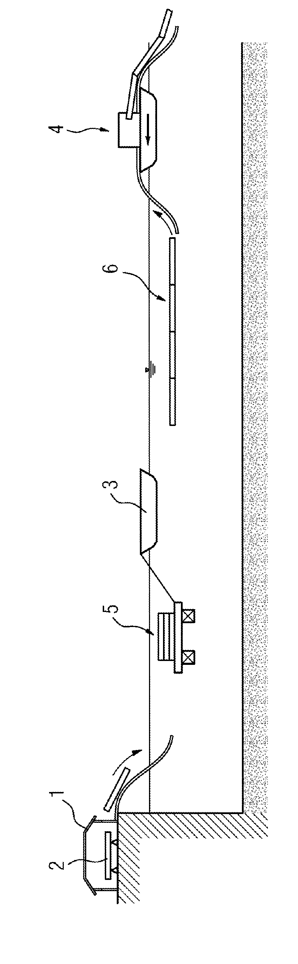

In der Figur 1 ist ein Montagegebäude 1 dargestellt, in welchem die Rohrabschnitte 2 überprüft werden. Es kann vorgesehen sein, dass die Rohrabschnitte vormontiert zu dem Montagegebäude 1 angeliefert werden und dort lediglich einer Prüfung unterzogen werden. Diese Prüfung kann beispielsweise eine Hochspannungsprüfung sein oder auch eine Dichtigkeitsprüfung. Es kann jedoch auch vorgesehen sein, dass in dem Montagegebäude 1 selbst eine Zusammenstellung der Rohrabschnitte aus Kapselungsgehäusen elektrischen Leitern und Isolierabstandshaltern, welche die elektrischen Leiter im Innern der Kapselungsgehäuse halten, vorgenommen wird.

Nach erfolgter Montage und Überprüfung werden die fertig gestellten hermetisch verschlossenen Rohrabschnitte in ein Gewässer abgesenkt. Dort können die Rohrabschnitte beispielsweise zu einem Bündel 5 zusammengefügt werden. Im vorliegenden Beispiel ist das Bündel 5 aus einer Vielzahl von Rohrabschnitten, die parallel zueinander angeordnet sind, gebildet. Das Bündel 5 ist an einem Transportgestell befestigt, welches als Ballastelemente wirkende Tanks aufweist. Die Tanks sind mit Wasser flutbar, so dass eine Einstellung der Eintauchtiefe des Bündels 5 über die Ballastelemente erfolgen kann. Mittels eines Schleppers 3 wird das Bündel 5 in eine Verlegezone 4 verbracht. Dort wird das Bündel aufgelöst und die einzelnen Rohrabschnitte stirnseitig miteinander verbunden, so dass eine gasisolierte elektrische Leitung entsteht.

Es kann jedoch auch vorgesehen sein, dass in dem Montagegebäude 1 eine Zusammenfügung mehrerer Rohrabschnitte an ihren Stirnseiten vorgenommen wird, d.h. es wird ein Abschnitt einer gasisolierten Leitung erzeugt, an dem die Kapselungsgehäuse stirnseitig miteinander verbunden werden und die im Innern der Kapselungsgehäuse befindlichen elektrischen Leiter miteinander kontaktiert werden. Die so entstehenden lang gestreckten Abschnitte 6 einer gasisolierten elektrischen Leitung sind dann auch schwimmend in die Verlegezone 4 schleppbar. Dabei kann vorgesehen sein, dass mehrere derartiger lang gestreckter Abschnitte 6 zu Bündeln verbunden werden, wodurch eine mechanisch stabilere Anordnung entsteht. Eine derartige Vorfertigung hat den Vorteil, dass in der Verlegezone 4 nur noch eine geringe Anzahl von Verbindungen zwischen den lang gestreckten Abschnitten zu erfolgen braucht. Dadurch kann eine effektive und rasche Verlegung einer gasisolierten elektrischen Leitung bewirkt werden.

## Patentansprüche

1. Verfahren zum Transport von Rohrabschnitten auf Gewässern
**dadurch gekennzeichnet , dass**
die Rohrabschnitte (2) schwimmend transportiert werden, wobei die Rohrabschnitte (2) mit einem Gas befüllt sind und als Schwimmkörper dienen.

2. Verfahren nach Anspruch 1,
**dadurch gekennzeichnet , dass**
die Eintauchtiefe der Rohrabschnitte (2) mit Ballastelementen eingestellt wird.

3. Verfahren nach Anspruch 1 oder Anspruch 2,
**dadurch gekennzeichnet , dass**
mehrere Rohrabschnitte (2) parallel gebündelt (5) transportiert werden.

4. Verfahren nach einem der Ansprüche 1 bis 3,
**dadurch gekennzeichnet , dass**
mehrere Rohrabschnitte (2) stirnseitig miteinander (6) verbunden sind.

5. Verfahren nach Anspruch 4,
**dadurch gekennzeichnet , dass**
zumindest zwischen zwei Rohrabschnitten (2) ein gemeinsamer Gasraum gebildet ist.

6. Verfahren nach einem der Ansprüche 1 bis 5,
**dadurch gekennzeichnet , dass**
während des Transportes Rohrabschnitte (2) unterhalb eines Gewässerspiegels liegen.

7. Verfahren nach einem der Ansprüche 1 bis 5,
**dadurch gekennzeichnet , dass**
während des Transports Rohrabschnitte (2) einen Gewässerspiegel durchstoßen.

8. Verfahren nach Anspruch 6,
**dadurch gekennzeichnet , dass**
die Rohrabschnitte (2) während des Transports ca. 10 m - 20 m unterhalb eines Gewässerspiegels liegen.
